# EUROPÄISCHE PATENTSCHRIFT

(11) **EP 2 669 561 B1**
(45) Veröffentlichungstag und Bekanntmachung des Hinweises auf die Patenterteilung: **14.10.2015**
(21) Anmeldenummer: 12170505.7
(22) Anmeldetag: 01.06.2012
(51) Int. Cl.: F16L 21/08, F16L 21/06

(54) **Rohrverbindungsvorrichtung**
Pipe connection device
Dispositif de liaison de conduits

(43) Veröffentlichungstag der Anmeldung: 04.12.2013
(73) Patentinhaber: Geberit International AG, 8645 Jona (CH)
(72) Erfinder: Kipfer, Richard, 8706 Meilen (CH); Bauer, Thomas, 8645 Jona (CH)
(74) Vertreter: Frischknecht, Harry Ralph

(56) Entgegenhaltungen:
- EP-A1- 1 970 613
- EP-A2- 1 767 842
- GB-A- 2 305 481
- US-A1- 2007 024 056

## Beschreibung

### TECHNISCHES GEBIET

Die vorliegende Erfindung betrifft eine Rohrverbindungsvorrichtung nach dem Oberbegriff von Anspruch 1, insbesondere für den Einsatz in der Entwässerung von Flächen, wie beispielsweise Dächer.

### STAND DER TECHNIK

Bei der Entwässerung von Flächen, wie etwa von Dächern an Gebäuden, wird das Regenwasser über Rohrleitungen abgeführt. Die einzelnen Rohrleitungsteile werden über Rohrverbinder miteinander verbunden, so dass eine entsprechende Rohrleitung bereistellbar ist.

Beispielsweise zeigt die EP 2 050 994 ein derartiger Rohrverbinder, welcher zur Verbindung von zwei Rohren dient. Das eine Rohr verfügt dabei an seinem Ende eine muffenartige Aufweitung, die der Aufnahme des Rohrendes des anderen Rohres dient. Der Rohrverbinder oder die Rohrschelle wirkt dann auf diese Aufweitung. Weiter sind diverse Dichtungselemente angeordnet, welche die Verbindung zwischen den beiden Rohren bezüglich des durch die Rohrleitung geführten Wassers dicht ausbilden.

Nachteilig an der technischen Lehre der EP 2 050 994 ist die Aufweitung des Rohrs, was die Kosten bei der Herstellung erhöht. Zudem ist auch die Flexibiltät bei der Montage der Rohrleitung kleiner, weil der Installateur die Rohrleitungsteile nur auf einer Seite ablängen kann.

Weiter ist der Kraftaufwand beim Zusammenstecken der beiden Rohrleitungsteile aufgrund der Dichtung zwischen beiden Rohrleitungsteilen sehr hoch, was für den Installateur auf der Baustelle ebenfalls sehr nachteilig ist.

Andere Rohrverbindungsvorrichtungen können auch der EP 1767842, US 2007/0024056 und EP 1970613 entnommen worden.

### DARSTELLUNG DER ERFINDUNG

Ausgehend vom Stand der Technik liegt der Erfindung eine Aufgabe zugrunde, eine Rohrverbindungsvorrichtung anzugeben, welche die Nachteile des Standes der Technik überwindet. Insbesondere soll der Kraftaufwand beim Einschieben eines Rohrs bei der Montage kleiner werden.

Eine solche Aufgabe löst eine Rohrverbindungsvorrichtung nach Anspruch 1. Demgemäss dient eine Rohrverbindungsvorrichtung dem Anschluss an mindestens ein Rohr bzw. an ein Fitting. Die Rohrverbindungsvorrichtung umfasst ein sich in einer Längsachse erstreckendes zylindrisches Muffenelement mit einer zylindrischen Aufnahmeöffnung zur Aufnahme des Rohrs, ein das Muffenelement umgebendes Spannelement, und eine im Spannelement angeordnete sich um die Längsachse herum erstreckende Dichtung. Die Dichtung erstreckt sich vollständig um die Längsachse. Das Spannelement ist beim Spannen von einer Ruheposition in eine Klemmposition betätigbar, wobei beim Spannen des Spannelementes die Dichtung radial die gegen Längsachse bewegbar ist und mit der Oberfläche eines in die Aufnahmeöffnung hineinragenden Rohrs in Verbindung bringbar ist. Die Dichtung steht im Ruhezustand bezüglich der Aufnahmeöffnung über den Innendurchmesser der Aufnahmeöffnung zurück, so dass der Querschnitt bzw. die lichte Weite der Aufnahmeöffnung in Richtung der Längsachse gesehen nicht verkleinert wird.

Aufgrund des Zurückstehens der Dichtung kommt das Rohr beim Einschieben in die Aufnahmeöffnung nicht und nur sehr marginal in Kontakt mit der Dichtung, wodurch beim Zusammenstecken die Reibungskraft zwischen Dichtung und Rohr wegfällt. Das Rohr kann somit ohne erheblichen Kraftaufwand gesteckt werden. Zudem wird beim Vorgang des Spannens die Dichtung zwischen dem Rohr und der Rohrverbindungsvorrichtung erstellt, was den Vorteil hat, dass die Dichtung in einfacher Art und Weise dimensionierbar ist. Weiter kann auch die Rohrverbindungsvorrichtung vor dem Vorgang der Montage bezüglich des Rohrs rotiert werden, wodurch der Installateur die Rohrverbindungsvorrichtung ausrichten kann.

Die Dichtung ist in einer umlaufenden Nut an der Aussenseite des Muffenelements am Muffenelement gehalten.

Vorzugsweise umfasst das Spannelement mehrere über den Umfang verteilt angeordnete Krallen, welche im Ruhezustand über den Innendurchmesser der Aufnahmeöffnung zurückstehen, so dass der Querschnitt bzw. die lichte Weite der Aufnahmeöffnung in Richtung der Längsachse gesehen nicht verkleinert wird. Beim Spannen des Spannelementes dringen die Krallen in die Oberfläche des Rohrs ein. Durch die Krallen kann eine formschlüssige Verbindung zwischen Rohr und Rohrverbindungselement bereitgestellt werden. Die Krallen dienen der Aufnahme von Zugkräften. Aufgrund des Zurückstehens der Krallen in Ruhelage wird auch nicht das Rohr beim Einsteckvorgang durch die Krallen behindert.

Beim Vorhandensein der Dichtung und der Krallen wird somit die Dichtigkeit und die Zugsicherheit in einem einzigen Schritt erstellt, was für den Installateur äusserst vorteilhaft ist.

Vorzugsweise verfügt die Dichtung über mindestens zwei Dichtabschnitte, wobei der erste Dichtabschnitt bezüglich der Längsachse gesehen vor der Stirnseite des Muffenelementes liegt und wobei der zweite Dichtabschnitt auf der Aussenseite des Muffenelementes liegt. Die beiden Dichtabschnitte sind dabei einstückig ausgebildet.

Der erste Dichtabschnitt kommt dabei in Kontakt mit der Aussenseite des Rohrs und dient der Abdichtung zwischen Rohr und dem zweiten Dichtbereich.

Der zweite Dichtabschnitt kommt in Kontakt mit der Aussenseite des Muffenelementes und dient der Abdichtung zwischen Muffenelement und dem ersten Dichtbereich.

Vorzugsweise umfasst der erste Dichtabschnitt mindestens eine, vorzugsweise zwei, Dichtlinien. Die Dichtlinien sind dabei vorzugsweise umlaufend um das Rohr mit dem Rohr in Kontakt und stehen in einem Abstand zueinander. Die Anordnung von zwei Dichtlinien hat den Vorteil, dass eine verbesserte Dichtigkeit bereitgestellt wird.

Besonders bevorzugt steht die Dichtung in Richtung der Längsachse teilweise von der Stirnseite des Muffenelements weg. Die Dichtung bildet also ein freies vom Muffenelement wegstehendes Ende. Dies hat den Vorteil, dass eine einfache Kontaktierung mit dem Rohr ermöglicht wird, wobei zugleich der Widerstand beim Einschieben nicht beeinträchtigt wird.

Vorzugsweise ist die Dichtung im Wesentlichen vollständig durch das Spannelement umgeben. Die Dichtung ragt also nicht in Richtung der Längsachse gesehen aus dem Spannelement hinaus, was den Vorteil hat, dass die Dichtung vor der Montage gegenüber äusseren Einflüssen geschützt ist.

Vorzugsweise stehen das Spannelement und die Dichtung mit dem Muffenelement in Verbindung. Dies hat den Vorteil, dass keine losen Teile an der Rohrverbindungsvorrichtung vorhanden sind.

Vorzugsweise verfügt das Spannelement über einen sich durch das Spannelement in Richtung der Längsachse erstreckenden Schlitz, wobei sich beidseitig zum Schlitz je eine Spannlasche vom Spannelement radial zur Längsachse gesehen weg erstreckt, wobei die Spannlaschen über ein Betätigungselement, insbesondere eine Schraube, beim Vorgang des Spannes aufeinander zu bewegt werden. Das Betätigungselement ist vorzugsweise als lösbares Betätigungselement ausgebildet, so dass die Rohrverbindungsvorrichtung lösbar bleibt.

In der Klemmposition stehen die Spannlaschen in Kontakt miteinander. Der Installateur kann also das Spannelement auf Block montieren, was den Vorteil hat, dass aufwändige Einstellarbeiten entfallen.

Vorzugsweise ist zwischen dem Spannelement und der Dichtung im Bereich des Schlitzes ein den Schlitz überbrückendes Brückenteil vorhanden. Das Brückenteil verhindert, dass Teile der Dichtung unterhalb des Schlitzes beim Vorgang des Spannens sich in den Schlitz ausdehnen.

Vorzugsweise ist das Spannelement bezüglich des Muffenelementes verschiebbar, insbesondere um die Längsachse herum verschwenkbar oder verdrehabr ausgebildet. Dies hat den Vorteil, dass das Spannelement vor dem Vorgang des Spannens durch den Installateur ausgerichtet werden kann. Bezüglich einer Bewegung in Längsrichtung stehen die Dichtung und das Spannelement mit dem Muffenelement fest in Verbindung, so dass keine Bewegung in diese Richtung zugelassen wird.

Das Spannelement ist vorzugsweise auf der Aussenseite des Muffenteils gelagert und ragt bezüglich der Längsachse gesehen abschnittsweise über die Stirnseite des Muffenelementes hinaus.

Vorzugsweise umfasst das Muffenelement zwei Endbereiche, wobei in jedem Endbereich je ein Spannelement und je eine Dichtung vorgesehen ist, wobei mit den im ersten Endbereich angeordneten Spannelement und Dichtung ein erstes Rohr mit dem Muffenelement verbindbar ist und wobei mit den im zweiten Endbereich angeordneten Spannelement und Dichtung ein zweites Rohr mit dem Muffenelement verbindbar ist.

Vorzugsweise ist in der Aufnahmeöffnung ein Anschlagselement für das Rohr vorgesehen, wobei das Rohr bis zu diesem Anschlagselement in das Muffenelement einschiebbar ist.

Eine Rohrverbindungsanordnung umfasst ein sich entlang einer Mittelachse erstreckendes Rohr mit einer um die Mittelachse umlaufende Seitenwand und einem Rohrinnenraum, der durch die Seitenwand begrenzt wird, wobei die Seitenwand eine gegen den Rohrinnenraum gerichtete Innenseite und eine Aussenseite umfasst, wobei das Rohr mit einer Rohrverbindungsvorrichtung nach einem der vorhergehenden Ansprüche in Verbindung steht, wobei das Rohr in die Rohrverbindungsvorrichtung einragt und Dichtung sowie Spannelement auf die Aussenseite des Rohrs wirken.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Ausführungsform einer Rohrverbindungsvorrichtung ohne Rohr;
- Fig. 2: die Ansicht nach Figur 1 mit Rohr;
- Fig. 3: eine Schnittansicht der Rohrverbindungsvorrichtung nach Figur 1 ohne Rohr;
- Fig. 4: eine Detailansicht der Figur 3 mit einer Dichtung nach einer ersten Ausführungsform;
- Fig. 5: eine Detailansicht der Figur 3 mit einer Dichtung nach einer zweiten Ausführungsform, nicht Teil der Erfindung.
- Fig. 6: eine Schnittansicht der Rohrverbindungsvorrichtung nach Figur 1 mit Rohr;
- Fig. 7: eine Detailansicht der Figur 6; und
- Fig. 8: eine Explosionsdarstellung nach Figur 1.

### BESCHREIBUNG BEVORZUGTER AUSFÜHRUNGSFORMEN

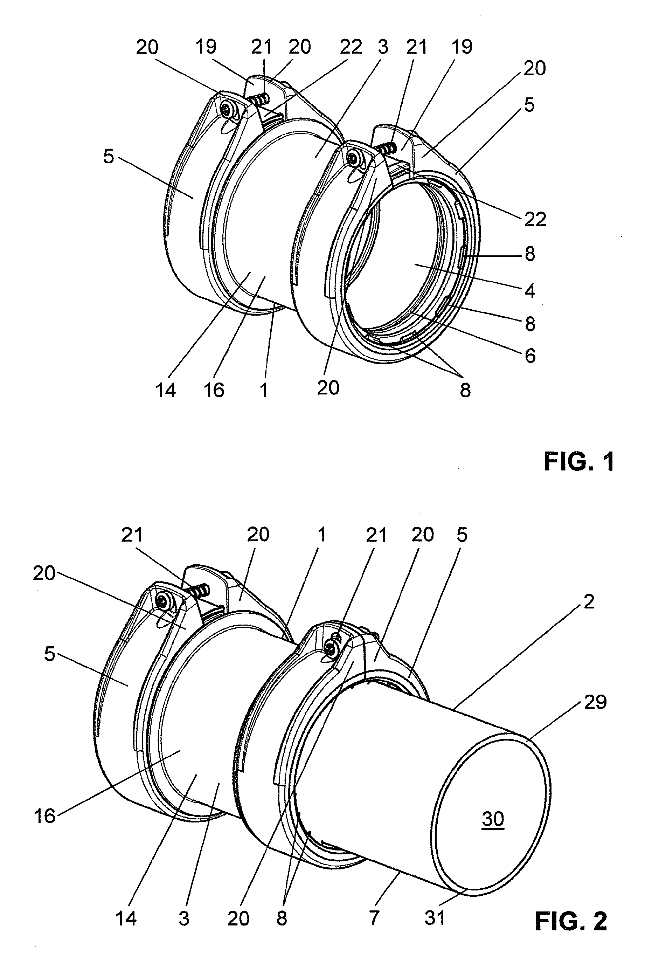

In der Figur 1 wird eine Rohrverbindungsvorrichtung 1 zur Verbindung mit mindestens einem Rohr bzw. zum Anschluss an mindestens ein Rohr 2 gezeigt. In der Figur 1 ist die Rohrverbindungsvorrichtung 1 ohne das Rohr gezeigt.

In der Figur 2 wird die Rohrverbindungsvorrichtung 1 mit einem in die Rohrverbindungsvorrichtung 1 einragenden Rohr 2 gezeigt. Die Rohrverbindungsvorrichtung 1 steht dabei bezüglich Fluiden, insbesondere Wasser, in einem dichten Kontakt mit dem Rohr 2. Das heisst die Verbindung zwischen dem Rohr 2 und der Rohrverbindungsvorrichtung 1 ist derart, dass kein im Rohr 2 transportiertes Fluid, wie etwa Wasser, über die Verbindung zwischen Rohr 2 und Rohrverbindungsvorrichtung 1 in den Aussenbereich bzw. in die Umwelt entweichen kann.

Das Rohr 2 erstreckt sich im Wesentlichen mit einer Rohrwand 29 um eine Mittelachse oder Längsachse L herum. Die Rohrwand 29 begrenzt dabei einen Innenraum 30, in welchem ein Fluid geführt werden kann. Die Rohrwand 29 weist eine dem Innenraum zugewandte Innenseite 31 und eine Aussenseite oder Oberfläche 7 auf.

Das Rohr 2 ragt hier von rechts in die Rohrverbindungsvorrichtung 1 ein und linker Hand kann ebenfalls ein weiteres Rohr, hier nicht gezeigt, in die Rohrverbindungsvorrichtung 1 einragen. In einem solchen Fall dient dann die Rohrverbindungsvorrichtung 1 zum Verbinden von zwei kollinear zueinander verlaufenden Rohren 2.

Die Rohrverbindungsvorrichtung 1 kann aber auch ein Teil eines Rohres 2 sein, so dass dieses Rohr über die Rohrverbindungsvorrichtung 1 mit einem anderen Rohr verbunden werden kann. Das andere Rohr ragt dann in das in das Rohr mit der Rohrverbindungsvorrichtung 1 entsprechend ein.

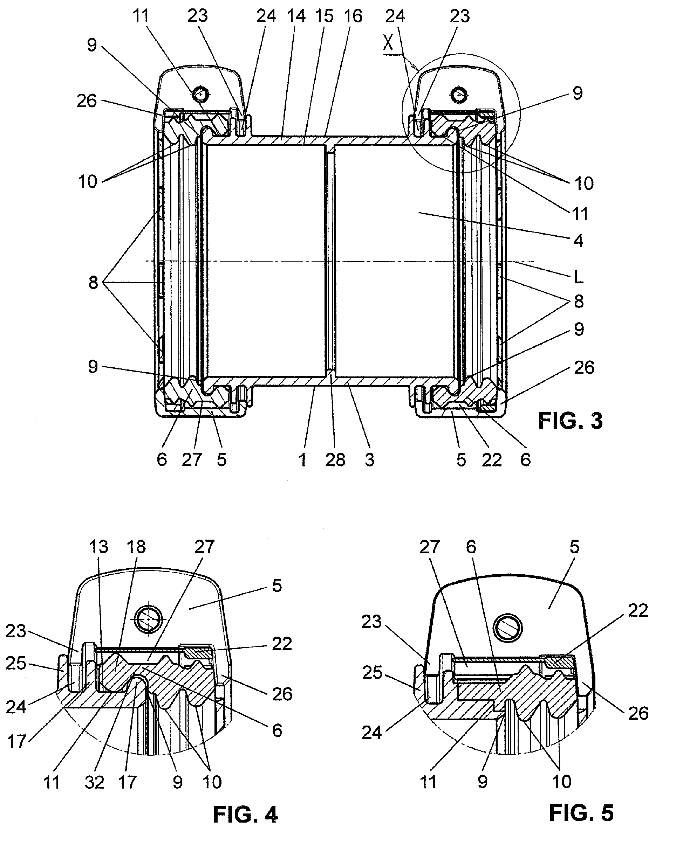

In der Figur 3 wird eine Schnittdarstellung der Rohrverbindungsvorrichtung 1 gezeigt.

Anhand der Figuren 1 bis 3 wird nun die Rohrverbindungsvorrichtung 1 gemäss einer möglichen Ausführungsform erläutert. Die Rohrverbindungsvorrichtung 1 umfasst im Wesentlichen ein Muffenelement 3, ein Spannelement 5 und eine Dichtung 6.

Das Muffenelement 3 erstreckt sich entlang einer Längsachse L und weist im Wesentlichen eine zylindrische Aufnahmeöffnung 4 zur Aufnahme des Rohres 2 auf. Die zylindrische Aufnahmeöffnung 4 ist hierdurch eine um die Längsachse L umlaufende Seitenwand 14 umgeben. Die Seitenwand 14 stellt dabei im Wesentlichen das Muffenelement 3 bereit. Die Seitenwand 14 weist dabei eine zur Aufnahmeöffnung 4 zugewandte Innenseite 15 und eine gegenüberliegend der Innenseite 15 angeordnete Aussenseite 16 auf. Die Aussenseite 16 ist der Umwelt bzw. dem Aussenbereich zugewandt. Links und rechts wird das Muffenelement 3 durch jeweils eine Stirnseite 9 begrenzt.

Das Spannelement 5 umgibt das Muffenelement 3 um dessen gesamten Umfang. Bezüglich der Längsachse L gesehen erstreckt sich das Spannelement 5 nur über einen Teilbereich des Muffenelementes 3. Das Spannelement 5 ist auf der Aussenseite 16 des Muffenteils gelagert und ragt bezüglich der Längsachse L gesehen abschnittsweise über die Stirnseite 9 des Muffenelementes 3 hinaus.

Die Dichtung 6 erstreckt sich ebenfalls um die Längsachse L herum. Die Dichtung 6 ist dabei im Spannelement 5 angeordnet und kann durch das Spannelement 5 entsprechend betätigt werden. Die Dichtung 6 steht mit dem Muffenelement 3 in Verbindung. Vorzugsweise über einen Formschluss oder einen Stoffschluss.

Das Spannelement 5 wird beim Spannen beziehungsweise beim der Betätigung von einer Ruheposition in eine Klemmposition betätigt. Beim Spannen wird der innere Durchmesser des Spannelementes 5 verkleinert, wobei dadurch die Dichtung 6 durch das Spannelement 5 radial gegen die Längsachse L bewegt wird und mit der Oberfläche 7 eines in die Aufnahmeöffnung 4 hineinragenden Rohres 2 in Verbindung beziehungsweise in Kontakt bringbar ist. Somit wird die Dichtung auf die Aussenseite des Rohrs 2 gepresst und entsprechend abgedichtet.

Im Ruhezustand, also wenn keine Spannkraft auf das Spannelement 5 und die Dichtung 6 wirken, steht die Dichtung bezüglich der Aufnahmeöffnung 4 über den Innendurchmesser der Aufnahmeöffnung 4 zurück. Das heisst die Dichtung 6 weist im Ruhezustand einen Innendurchmesser auf, welcher grösser ist als der Innendurchmesser der Aufnahmeöffnung 4. Die lichte Weite bzw. der Querschnitt der Aufnahmeöffnung 4 in Richtung der Längsachse L gesehen wird dabei nicht verkleinert, was den Vorteil hat, dass ein Rohr 2 ohne Kontakt oder ohne wesentlichen Kontakt mit der Dichtung 6 in die Aufnahmeöffnung 4 eingeschoben werden kann. Aufgrund des Zurückstehens der Dichtung 6 kann somit eine besonders einfache Montage gewährleistet werden. Weiter kann auf die Verwendung von Gleitmitteln oder anderen Hilfsmitteln bei der Montage verzichtet werden, was die Montagezeit erheblich verkürzt. Zudem muss das Rohrende auch nicht mechanisch vorbereitet werden.

Wie in der Figur 1 und der Figur 3 gut erkannt werden kann umfasst das Spannelement 5 mehrere über den Umfang verteilt angeordnete Krallen 8. Diese Krallen 8 stehen im Ruhezustand über den Innendurchmesser der Aufnahmeöffnung 4 zurück, so dass die lichte Weite bzw. der Querschnitt der Aufnahmeöffnung 4 in Richtung der mit Längsachse L gesehen nicht verkleinert wird. Folglich stellen diese Krallen 8, wie die Dichtung 6, kein Hindernis beim Einführen des Rohrs in die Aufnahmeöffnung 4 des Muffenelement 3 bereit. Beim Spannen des Spannelementes 5 dringen die Krallen 8 in die Oberfläche 7 des Rohrs 2 ein und stellen somit eine mechanische Sicherung zwischen dem Rohr 2 und dem Spannelement 5 bezüglich einer axialen und/oder radialen Krafteinwirkung bezüglich der Längsachse L bereit.

Die Krallen 8 sind vorzugsweise in gleichmässigen Abständen um den Umfang des Spannelementes 5 verteilt angeordnet.

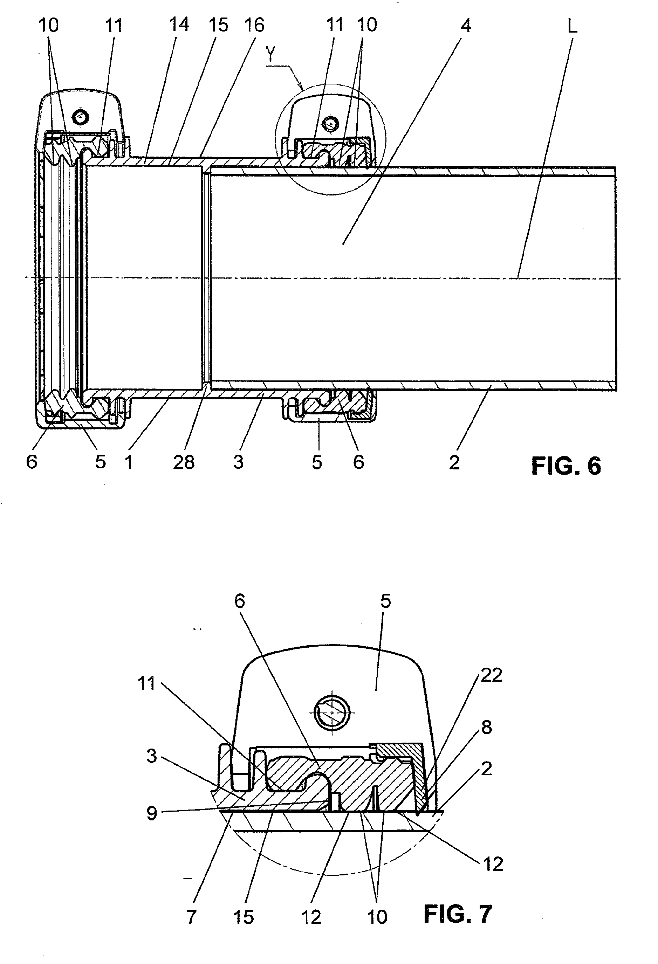

Anhand der Figuren 6 und 7 wird nun die Dichtsituation zwischen dem Rohr 2, das in die Aufnahmeöffnung 4 des Muffenteils 3 einragt und dem Muffenteil 3 genauer erläutert. Die Dichtung 6 verfügt über mindestens zwei Dichtabschnitte 10, 11, nämlich über einen ersten Dichtabschnitt 10 und einen zweiten Dichtabschnitt 11.

Der erste Dichtabschnitt 10 dichtet den Spalt zwischen der Rohroberfläche 7 und Dichtung ab. Folglich kann also Wasser, welches sich zwischen der Innenseite 15 des Muffenelementes 3 und der Oberfläche 7 des Rohres in Längsrichtung L ausbreitet durch diesen Dichtabschnitt 10 entsprechend abgefangen werden und gelangt somit nicht entlang der Oberfläche 7 des Rohrs 2 zum Aussenbereich.

Das Dichtelement verbindet die beiden Dichtstellen bzw. Dichtabschnitte axial umlaufend geschlossen.

Der zweite Dichtabschnitt 11 dichtet weiter den Spalt zwischen dem Muffenelement 3 und Dichtung. Somit kann also Wasser, welches kurz vor dem ersten Dichtabschnitt 10 sich radial ausbreitet nicht den zweiten Dichtabschnitt 11 überwinden und in den Aussenbereich gelangen.

Der erste Dichtabschnitt 10 umfasst vorzugsweise mindestens eine, hier zwei, Dichtlinien 12. Eine Dichtlinie 12 definiert sich im vorliegenden Fall als umlaufende Kontaktstelle zwischen dem Dichtelement 6 und der Oberfläche des Rohrs 7. Besonders bevorzugt sind genau zwei Dichtlinien 12 vorgesehen, wie in der Figur 7 gezeigt. Der zweite Dichtabschnitt 11 weist typischerweise nur eine Dichtlinie auf, kann aber auch wie der erste Dichtabschnitt 11 mehrere Dichtlinien aufweisen.

Mit anderen Worten kann auch gesagt werden, dass der erste Dichtabschnitt 10 eine Dichtwirkung auf dem Rohr 2 bereitstellt und somit gegenüber dem Rohr 2 dichtet und dass der zweite Dichtabschnitt 11 die Mündung des Muffenelementes 3 umgibt und diese entsprechend abdichtet.

Mit Bezugnahme auf die Figuren 4 und 5 kann gut erkannt werden, dass die Dichtung 7 in der Längsachse L gesehen vorzugsweise teilweise von der Stirnseite 9 des Muffenelementes 3 wegstehen. Mit anderen Worten heisst dies, dass die Dichtung 7 das Muffenelement 3 in Richtung der Längsachse gesehen verlängert. Dieses Wegstehen oder Überstehen hat den Vorteil, dass das Dichtungselement 7 beim Spannen des Spannelementes 5 einfach in Kontakt mit der Aussenoberfläche 7 des Rohrs 2 gebracht werden kann. Mit anderen Worten kann auch gesagt werden, dass die Dichtung 7 eine Art freies Ende, welches vom Muffenelement 3 wegsteht, bildet.

In den Figuren 4 und 5 werden zwei verschiedene Ausführungsformen der Dichtung 6 gezeigt.

Nach der Figur 4 wird die Dichtung 6 in einer umlaufenden Nut 13 auf der Aussenseite 16 des Muffenelementes 3 am Muffenelement 3 gehalten. Die Nut 13 wird hier über zwei umlaufende sich von der Aussenseite 16 erstreckende Erhebungen 17, die beanstandet zueinander angeordnet sind, gebildet. Die Nut 13 wird somit von den Erhebungen 17 und des dazwischenliegenden Bereichs der Seitenwand 14 gebildet. In die Nut 13 ragt die Dichtung 6 mit einem Ansatz 18 ein. Der Ansatz 18 stellt dann zugleich den zweiten Dichtabschnitt 11 bereit.

Vom Ansatz 18 erstreckt sich dann die Dichtung 6 mit dem ersten Dichtabschnitt 10 über die Stirnseite 9 vom Muffenelement 3 weg sowie dies oben erläutert wurde. Der erste Dichtungsabschnitt 10 kann auch als freies Ende der Dichtung 6 bezeichnet werden. Zwischen Ansatz 18 und Dichtabschnitt 10 ist hier ein optionaler im Querschnitt verjüngter Übergang 32 vorgesehen.

Somit liegt also der erste Dichtabschnitt 10 bezüglich der Längsachse L gesehen vor der Stirnseite 9 des Muffenteils 3 und der zweite Dichtabschnitt liegt auf der Aussenseite des Muffenteils 3.

In der Figur 5 wird eine weitere Ausführungsform der Befestigung des Dichtelementes am Muffenelement 3 gezeigt, die nicht zu der Erfindung gehört. Die Dichtung 6 ist dabei am Muffenelement 3 angeformt. Beispielweise kann die Dichtung 6 zusammen mit dem Muffenelement 3 bei der Herstellung desselben spritzgegossen werden oder die Dichtung 6 wird am Muffenelement 3 angeklebt. Bevorzugterweise liegt in dieser Ausführungsform zwischen Muffenelement 3 und Dichtung 6 eine stoffschlüssige Verbindung vor. Auch hier ragt die Dichtung 6 bevorzugt über die Stirnfläche 9 des Muffenelementes 3. Der erste Dichtungsabschnitt 10 wird durch den von der Stirnfläche 9 wegragenden Teil gebildet und der zweite Dichtungsabschnitt 11 wird durch die stoffschlüssige Verbindung zwischen Dichtung 6 und Muffenelement 3 gebildet.

Anhand der Figuren 1 und 2 wird nun das Spannelement 5 im Detail erläutert. Das Spannelement 5 weist im Wesentlichen die Gestalt eines Ringes auf und verfügt über einen sich durch das Spannelement 5 in Richtung der Längsachse L erstreckenden Schlitz 19, welcher das Spannelement 5 bzw. den Ring aufteilt. Beidseitig zum Schlitz 19 erstreckt sich je eine Spannlasche 20 vom Spannelement 5 radial zur Längsachse L gesehen vom Spannelement 5 weg. Die Spannlaschen 20 stehen über ein Betätigungselement 21, hier in der Gestalt einer Schraube 21, miteinander in Verbindung. Beim Vorgang des Spannens werden die beiden Spannlaschen 20 aufeinander zu bewegt, so dass die Spannlaschen 20 miteinander in Kontakt kommen, wie in Figur 2 gezeigt. Beim Vorgang des Spannens wird der Durchmesser des Spannelementes 5 entsprechend verkleinert und die Dichtung 6 wird, wie oben erläutert, in radiale Richtung gegen die Längsachse L bewegt und kommt schlussendlich mit dem in der Aufnahmeöffnung 4 liegenden Rohr 2 in Kontakt.

Die Spannlaschen 20 stehen in der Klemmposition miteinander in Kontakt. Dies hat den Vorteil, dass der Installateur die Spannlaschen 20 auf Block fahren kann und somit auf die Verwendung einer Lehre oder ähnlichen Hilfswerkzeugen bei der Montage verzichtet werden kann. In der Figur 2 wird das Spannelement 5 in der Klemmposition gezeigt. Hier kann gut erkannt werden, dass die Spannlaschen 20 miteinander in Kontakt stehen.

In der Figur 1 und auch in den Schnittdarstellungen der Figuren 3 bis 5 kann gut erkannt werden, dass zwischen dem Spannelement 5 und der Dichtung 6 im Bereich des Schlitzes 19 ein Brückenteil 22 vorhanden ist. Mit dem Brückenteil 22 wird der Schlitz 19 überbrückt. Dieses Brückenteil 22 dient einerseits der gleichmässigen Aufbringung der radialen Kraft beim Vorgang des Spannens. Andererseits verhindert das Brückenteil 22, dass sich die Dichtung in radialer Richtung in den Schlitz 19 beim Vorgang des Spannens hineinbewegt.

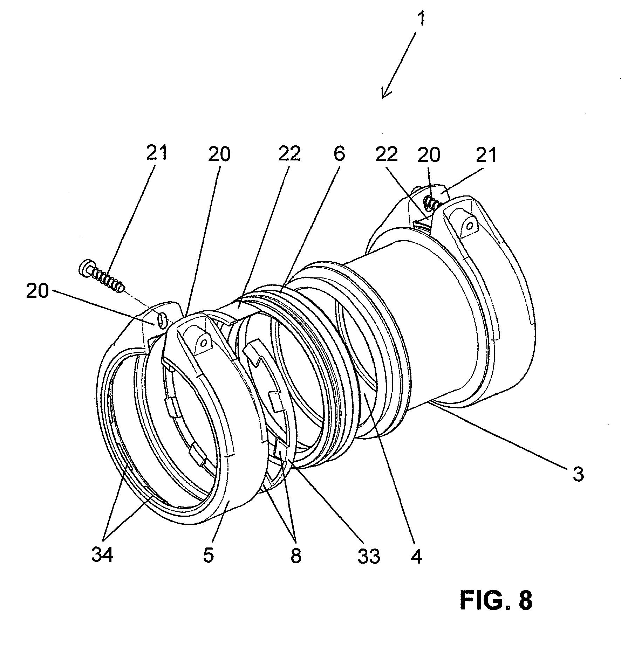

Das Brückenteil kann, wie in Figur 8 gezeigt, ebenfalls mit Krallen 8 versehen sein. Beispielsweise kann das Brückenteil Teil eines geschlitzten Ring 33 sein, welcher in das Spannelement 5 einlegbar ist. Der geschlitzte Ring 33 umfasst dann weiter die Krallen 8, welche vom Ring 33 radial abstehen. Der Ring 33 ist im Spannelement 5, also in dessem Innenraum 27 zwischen Dichtung 6 und Spannelement 5 gelagert. Das Spannelement 5 kann dabei Ausnehmungen 34 aufweisen, in welche die Krallen 8 einragen, so dass der Ring 33 nicht zum Spannelement 5 verschwenkbar ist.

Das Spannelement 5 steht mit dem Muffenelement 3 in Verbindung. Dabei ist das Spannelement 5 bezüglich des Muffenelementes 3 bevorzugt verschiebbar, insbesondere um die Längsachse L herum verschwenkbar, gelagert. Diese Verschwenkbarkeit hat den Vorteil, dass der Installateur das Spannelement 5 bei der Installation entsprechenden ausrichten kann, so dass einfacher Zugang zum Befestigungselement 21 geschaffen wird.

Das Spannelement 5 umfasst hier einen hinteren Ansatz 23, welcher sich von Spannelement 5 in radialer Richtung gegen die Längsachse L erstreckt. Der Ansatz 23 ragt in eine Nut 24 ein, welche von einem der Ansätze 18 und einem weiteren Ansatz 25 gebildet wird. Über die Verbindung Ansatz 23 und Nut 24 kann die besagte Verschenkbarkeit entsprechend bereitgestellt werden. Beim Vorgang des Spannens wird der Ansatz 23 weiter in die Nut 24 hineinbewegt. Weiter dient die besagte Verbindung der axialen Sicherung des Spannelementes 5 zum Muffenelement 3. Somit steht also das Spannelement 5 mit dem Muffenelement 3 in Verbindung.

Von der Schnittdarstellung der Figur 3 kann weiterhin erkannt werden, dass das Spannelement 5 auch einen vorderen Ansatz 26 aufweist, welcher sich um die Längsachse herum von Spannlasche 20 zu Spannlasche 20 erstreckt. Der vordere Ansatz 26 und der hintere Ansatz 27 begrenzen hier einen Innenraum 27 im Spannelement 5. Der Innenraum 27 dient im Wesentlichen der Aufnahme der Dichtung 6. Mit anderen Worten kann auch gesagt werden, dass die Dichtung 6 durch das Spannelement 5 umgeben ist und so gegenüber äusseren Einflüssen geschützt ist.

Weiter sind am Ansatz 26 auch die Krallen 8 angeformt und erstrecken sich von diesem Ansatz 26 radial zur Längsachse L hin.

Bei der in den Figuren 1 bis 7 gezeigter Ausführungsform handelt es sich um eine besonders bevorzugte Rohrverbindungsvorrichtung 1, bei welcher in jedem Endbereich des Muffenelementes 3 je ein Spannelement 5 und je eine Dichtung 6 vorgesehen ist. Mit den in einem Endbereich angeordneten Spannelement 5 und Dichtung 6 ist ein erstes Rohr mit dem Muffenelement 3 verbindbar und mit den im anderen Endbereich angeordneten Spannelement 3 und Dichtung 6 ist ein zweites Rohr mit dem Muffenelement 3 verbindbar. Mit anderen Worten heisst dies, dass die Rohrverbindungsvorrichtung der Verbindung von zwei kollinear verlaufenden Rohren dient, wobei pro Rohr je ein Dichtungselement 6 und je ein Spannelement 5 vorgesehen ist.

Das Spannelement 5 und die Dichtung 6 in den beiden Endbereichen sind dabei identisch zueinander ausgebildet.

Weiter kann bei Verzweigungsteilen, Bögen und anderen Fittingen auch an jeder Rohrmündung ein Spannelement 5 und eine Dichtung 6 angeordnet werden.

In alternativen nicht gezeigten Ausführungsformen ist es auch möglich, dass nur eine Paarung bestehend aus Spannelement 5 und Dichtung 6 an einem Muffenelement 3 angeordnet sind. Dabei kann das Muffenelement 3 beispielsweise die Gestalt eines Rohres haben, welches dann mit einem weiteren Rohr entsprechend verbunden wird.

Das Muffenelement 3 umfasst vorzugsweise ein Anschlagselement 28 für das in die Aufnahmeöffnung 4 einzuschiebende Rohr. Vorzugsweise ist das Anschlagselement 28 eine umlaufende Erhebung, welche sich von der Innenseite 15 des Muffenelementes 3 in den Aufnahmeöffnung 4 hineinerstreckt. In der vorliegenden Ausführungsform ist das Anschlagselement 28 bezüglich der Längsachse L mittig im Muffenelement 3 angeordnet. Das in die Aufnahmeöffnung 4 einzuschiebende Rohr 2 ist dabei bis zu diesem Anschlagselement 28 in das Muffenelement 3 einschiebbar. Das Anschlagselement 28 hat den Vorteil, dass der Installateur bei der Montage die Einführtiefe des Rohres nicht entsprechend messen muss, sondern das Rohr eben auf dieses Anschlagselement 28 einschieben kann.

Zusammenfassend kann gesagt werden, dass die vorliegende Rohrverbindungsvorrichtung eine Vielzahl von Vorteilen aufweist. Die Rohre können ohne grossen Kraftafwand in die Rohrverbindungsvorrichtung eingesteckt werden. Über das Spannelement 5 ist eine dimensionierte Kraft aufbringbar. Beim Vorhandensein der Kralle 8 wird Dichtigkeit und Zugsicherheit mit einer Bewegung beim Spannen bzw. Schliessen des Spannelementes 5 bereitgestellt. Weiter kann die Rohrverbindungsvorrichtung schnell und effizient montiert werden und ist zudem lösbar und wiederverwendbar ausgebildet.

**BEZUGSZEICHENLISTE**

| | | | |
|---|---|---|---|
| 1 | Rohrverbindungsvorrichtung | 27 | Innenraum |
| 2 | Rohr | 28 | Anschlagselement |
| 3 | Muffenelement | 29 | Rohrwand |
| 4 | Aufnahmeöffnung | 30 | Innenraum |
| 5 | Spannelement | 31 | Innenseite |
| 6 | Dichtung | 32 | Übergang |
| 7 | Aussenoberfläche des Rohrs | 33 | Ring |
| 8 | Krallen | 34 | Ausnehmungen |
| 9 | Stirnseite | | |
| 10 | erster Dichtabschnitt | | |
| 11 | zweiter Dichtabschnitt | | |
| 12 | Dichtlinie | | |
| 13 | Nut | | |
| 14 | Seitenwand | | |
| 15 | Innenseite | | |
| 16 | Aussenseite | | |
| 17 | Erhebung | | |
| 18 | Ansatz | | |
| 19 | Schlitz | | |
| 20 | Spannlaschen | | |
| 21 | Betätigungselement. | | |
| 22 | Brückenteil | | |
| 23 | hinterer Ansatz | | |
| 24 | Nut | | |
| 25 | Ansatz | | |
| 26 | vorderer Ansatz | | |

## Patentansprüche

1. Rohrverbindungsvorrichtung (1) zum Anschluss an mindestens ein Rohr (2) bzw. an einen Fitting umfassend
ein sich entlang einer Längsachse (L) erstreckendes zylindrisches Muffenelement (3) mit einer zylindrischen Aufnahmeöffnung (4) zur Aufnahme des Rohrs (2),
ein das Muffenelement (3) umgebendes Spannelement (5), und
eine im Spannelement (5) angeordnete sich um die Längsachse (L) herum erstreckende Dichtung (6),
wobei das Spannelement (5) beim Spannen von einer Ruheposition in eine Klemmposition betätigbar ist, wobei beim Spannen des Spannelementes (5) die Dichtung (6) radial gegen die Längsachse (L) bewegbar ist und mit der Oberfläche (7) eines in die Aufnahmeöffnung (4) hineinragenden Rohrs (2) in Verbindung bringbar ist,
wobei
die Dichtung (6) im Ruhezustand bezüglich der Aufnahmeöffnung (4) über den Innendurchmesser der Aufnahmeöffnung (4) zurücksteht, so dass der Querschnitt der Aufnahmeöffnung (4) in Richtung der Längsachse (L) gesehen nicht verkleinert wird, **dadurch gekennzeichnet, dass** die Dichtung (6) in einer umlaufenden Nut (13) an der Aussenseite (16) des Muffenelements (3) am Muffenelement (3) gehalten wird.

2. Rohrverbindungsvorrichtung (1) nach Anspruch 1, **dadurch gekennzeichnet, dass** das Spannelement (5) mehrere über den Umfang verteilt angeordnete Krallen (8) umfasst, welche im Ruhezustand über den Innendurchmesser der Aufnahmeöffnung (4) zurückstehen, so dass der Querschnitt der Aufnahmeöffnung (4) in Richtung der Längsachse (L) gesehen nicht verkleinert wird, und welche Krallen (8) beim Spannen des Spannelementes (5) in die Oberfläche (7) des Rohrs (2) eindringen.

3. Rohrverbindungsvorrichtung (1) nach Anspruch 1 oder 2, **dadurch gekennzeichnet, dass** die Dichtung (6) über mindestens zwei Dichtabschnitte (10, 11) verfügt, wobei der erste Dichtabschnitt (10) bezüglich der Längsachse (L) gesehen vor der Stirnseite (9) des Muffenteils (3) liegt und wobei der zweite Dichtabschnitt auf der Aussenseite des Muffenteils (3) liegt.

4. Rohrverbindungsvorrichtung nach Anspruch 3, **dadurch gekennzeichnet, dass** der erste Dichtabschnitt (10) mindestens eine, vorzugsweise zwei, insbesondere genau zwei, Dichtlinien (12) umfasst.

5. Rohrverbindungsvorrichtung nach einem der vorhergehenden Ansprüche, **dadurch gekennzeichnet, dass** die Dichtung (6) in Richtung der Längsachse (L) teilweise von der Stirnseite (9) des Muffenelements (3) weg steht.

6. Rohrverbindungsvorrichtung nach einem der vorhergehenden Ansprüche, **dadurch gekennzeichnet, dass** das Spannelement (5) über einen sich durch das Spannelement (5) in Richtung der Längsachse (L) erstreckenden Schlitz (19) verfügt, wobei sich beidseitig zum Schlitz je eine Spannlasche (20) vom Spannelement (5) radial zur Längsachse (L) gesehen weg erstreckt, wobei die Spannlaschen (20) über ein Betätigungselement (21) miteinander in Verbindung stehen und beim Vorgang des Spannes aufeinander zu bewegt werden.

7. Rohrverbindungsvorrichtung nach Anspruch 6, **dadurch gekennzeichnet, dass** die Spannlaschen (20) in der Klemmposition in Kontakt zueinander stehen.

8. Rohrverbindungsvorrichtung nach Anspruch 6 oder 7, **dadurch gekennzeichnet, dass** zwischen dem Spannelement (5) und der Dichtung (6) im Bereich des Schlitzes (19) ein den Schlitz (19) überbrückendes Brückenteil (22) vorhanden ist, wobei das Brückenteil (22) sich segmentweise um die Längsachse (L) herum erstreckt oder wobei das Brückenteil (22) als geschlitzter Ring ausgebildet ist, welcher im Spannelement (5) eingelegt ist.

9. Rohrverbindungsvorrichtung nach einem der vorhergehenden Ansprüche, **dadurch gekennzeichnet, dass** das Spannelement (5) bezüglich des Muffenelementes (3) verschiebbar, insbesondere um die Längsachse (L) herum verschwenkbar ausgebildet ist und/oder dass die Dichtung (6) und das Spannelement (5) bezüglich einer Bewegung in Längsrichtung zum Muffenelement (3) gesichert sind.

10. Rohrverbindungsvorrichtung nach einem der vorhergehenden Ansprüche, **dadurch gekennzeichnet, dass** das Spannelement (5) auf der Aussenseite (16) des Muffenteils gelagert ist und bezüglich der Längsachse (L) gesehen abschnittsweise über die Stirnseite (9) des Muffenelementes (3) hinausragt.

11. Rohrverbindungsvorrichtung nach einem der vorhergehenden Ansprüche, **dadurch gekennzeichnet, dass** das Muffenelement (3) zwei Endbereiche umfasst, wobei in jedem Endbereich je ein Spannelement (5) und je eine Dichtung (6) vorgesehen ist, wobei mit den im ersten Endbereich angeordneten Spannelement (5) und Dichtung (6) ein erstes Rohr mit dem Muffenelement (3) verbindbar ist und wobei mit den im zweiten Endbereich angeordneten Spannelement (5) und Dichtung (6) ein zweites Rohr mit dem Muffenelement verbindbar ist.

12. Rohrverbindungsvorrichtung nach einem der vorhergehenden Ansprüche, **dadurch gekennzeichnet, dass** in der Aufnahmeöffnung (4) ein Anschlagselement (26) für das Rohr (2) vorgesehen ist, wobei das Rohr (2) bis zu diesem Anschlagselement in das Muffenelement (3) einschiebbar ist.

13. Rohrverbindungsanordnung umfassend ein sich entlang einer Mittelachse erstreckendes Rohr (2) mit einer um die Mittelachse (L) umlaufende Seitenwand (29) und einem Rohrinnenraum (30), der durch die Seitenwand (29) begrenzt wird, wobei die Seitenwand (29) eine gegen den Rohrinnenraum (30) gerichtete Innenseite (31) und eine Aussenseite (7) umfasst, dadurch gekenzeichnet, dass das Rohr (2) mit einer Rohrverbindungsvorrichtung (1) nach einem der vorhergehenden Ansprüche in Verbindung steht, wobei das Rohr (2) in die Rohrverbindungsvorrichtung (1) einragt und Dichtung (6) sowie Spannelement (5) auf die Aussenseite (7) des Rohrs (2) wirken.

14. Rohrverbindungsanordnung nach Anspruch 13, **dadurch gekennzeichnet, dass** die Anordnung zwei kollinear zueinander verlaufende Rohre (2) umfasst, welche mit der Rohrverbindungsvorrichtung (1) verbindbar sind.

## Claims

1. Pipe-connection device (1) for connecting to at least one pipe (2) or a fitting, respectively, comprising: a cylindrical sleeve element (3) which extends along a longitudinal axis (L), having
a cylindrical receptacle opening (4) for receiving the pipe (2),
a tensioning element (5) which surrounds the sleeve element (3), and
a seal (6) which is disposed in the tensioning element (5) and extends around the longitudinal axis (L),
wherein the tensioning element (5) during tensioning is activatable from a standby position to a clamping position,
wherein during tensioning of the tensioning element (5) the seal (6) is movable radially towards the longitudinal axis (L) and is connectable to the surface (7) of a pipe (2) which protrudes into the receptacle opening (4), wherein the seal (6) in the standby position in relation to the receptacle opening (4) is recessed behind the internal diameter of the receptacle opening (4) such that the cross section of the receptacle opening (4) is not reduced when viewed in the direction of the longitudinal axis (L), **characterized in that** the seal (6) is retained on the sleeve element (3) in an encircling groove (13) on the external side (16) of the sleeve element (3).

2. Pipe-connection device (1) according to Claim 1, **characterized in that** the tensioning element (5) comprises a plurality of claws (8) which are disposed so as to be distributed across the circumference and which in the standby position are recessed behind the internal diameter of the receptacle opening (4) such that the cross section of the receptacle opening (4) is not reduced when viewed in the direction of the longitudinal axis (L), and which claws (8) penetrate the surface (7) of the pipe (2) when the tensioning element (5) is tensioned.

3. Pipe-connection device (1) according to Claim 1 or 2, **characterized in that** the seal (6) disposes of at least two sealing portions (10, 11), wherein the first sealing portion (10) when viewed in relation to the longitudinal axis (L) lies ahead of the face side (9) of the sleeve part (3), and wherein the second sealing portion lies on the external side of the sleeve part (3).

4. Pipe-connection device according to Claim 3, **characterized in that** the first sealing portion (10) comprises at least one, preferably two, particularly preferably exactly two sealing lines (12).

5. Pipe-connection device according to any one of the preceding claims, **characterized in that** the seal (6) in the longitudinal direction (L) in part extends away from the face side (9) of the sleeve element (3).

6. Pipe-connection device according to any one of the preceding claims, **characterized in that** the tensioning element (5) disposes of a slot (19) which extends through the tensioning element (5) in the direction of the longitudinal axis (L), wherein on either side of the slot in each case one tensioning lug (20) viewed in relation to the longitudinal axis (L) extends radially away from the tensioning element (5), wherein the tensioning lugs (20) are interconnected by way of an activating element (21) and during the tensioning operation are moved towards one another.

7. Pipe-connection device according to Claim 6, **characterized in that** the tensioning lugs (20) in the clamping position contact one another.

8. Pipe-connection device according to Claim 6 or 7, **characterized in that** a bridging part (22) which bridges the slot (19) is provided between the tensioning element (5) and the seal (6) in the region of the slot (19), wherein the bridging part (22) extends in segments about the longitudinal axis (L), or wherein the bridging part (22) is configured as a slotted ring which is interposed in the tensioning element (5).

9. Pipe-connection device according to any one of the preceding claims, **characterized in that** the tensioning element (5) is configured so as to be displaceable in relation to the sleeve element (3), in particular is configured so as to be pivotable about the longitudinal axis (L), and/or **in that** the seal (6) and the tensioning element (5) are fixedly secured against movement in the longitudinal direction in relation to the sleeve element (3).

10. Pipe-connection device according to any one of the preceding claims, **characterized in that** the tensioning element (5) is mounted on the external side (16) of the sleeve part and viewed in relation to the longitudinal axis (L) protrudes in portions beyond the face side (9) of the sleeve element (3).

11. Pipe-connection device according to any one of the preceding claims, **characterized in that** the sleeve element (3) comprises two end regions, wherein in each case one tensioning element (5) and in each case one seal (6) are provided in each end region, wherein a first pipe is connectable to the sleeve element by way of the tensioning element (5) and seal (6) which are disposed in the first end region, and wherein a second pipe is connectable to the sleeve element by way of the tensioning element (5) and seal (6) which are disposed in the second end region.

12. Pipe-connection device according to any one of the preceding claims, **characterized in that** a stop element (26) for the pipe (2) is provided in the receptacle opening (4), wherein the pipe (2) is insertable into the sleeve element (3) up to this stop element.

13. Pipe-connection assembly, comprising a pipe (2) which extends along a central axis and which has a side wall (29) encircling the central axis (L) and a pipe interior (30) delimited by the side wall (29), wherein the side wall (29) comprises an internal side (31), which is directed towards the pipe interior (30), and an external side (7), **characterized in that** the pipe (2) is connected to a pipe-connection device (1) according to any one of the preceding claims, wherein the pipe (2) protrudes into the pipe-connection device (1), and the seal (6) and the tensioning element (5) act on the external side (7) of the pipe (2).

14. Pipe-connection assembly according to Claim 13, **characterized in that** the assembly comprises two pipes (2) which extend in a collinear manner in relation to one another and which are connectable to the pipe-connection device (1).

## Revendications

1. Dispositif de raccordement de tuyau (1) pour le raccordement à au moins un tuyau (2) ou à un raccord, comprenant
un élément de manchon cylindrique (3) s'étendant le long d'un axe longitudinal (L) avec une ouverture de réception cylindrique (4) pour recevoir le tuyau (2),
un élément de serrage (5) entourant l'élément de manchon (3), et
un joint d'étanchéité (6) disposé dans l'élément de serrage (5) et s'étendant autour de l'axe longitudinal (L),
l'élément de serrage (5), lors du serrage, pouvant être actionné d'une position de repos dans une position de serrage, le joint d'étanchéité (6), lors du serrage de l'élément de serrage (5), pouvant être déplacé radialement contre l'axe longitudinal (L) et pouvant être amené en liaison avec la surface (7) d'un tuyau (2) pénétrant dans l'ouverture de réception (4),
le joint d'étanchéité (6), dans l'état de repos, étant en retrait par rapport à l'ouverture de réception (4) sur le diamètre intérieur de l'ouverture de réception (4), de telle sorte que la section transversale de l'ouverture de réception (4), vue dans la direction de l'axe longitudinal (L), ne soit pas réduite, **caractérisé en ce que** le joint d'étanchéité (6) est retenu contre l'élément de manchon (3) dans une rainure périphérique (13) au niveau du côté extérieur (16) de l'élément de manchon (3).

2. Dispositif de raccordement de tuyau (1) selon la revendication 1, **caractérisé en ce que** l'élément de serrage (5) comprend plusieurs collets (8) répartis sur la périphérie, lesquels sont en retrait dans l'état de repos sur le diamètre intérieur de l'ouverture de réception (4), de telle sorte que la section transversale de l'ouverture de réception (4), vue dans la direction de l'axe longitudinal (L), ne soit pas réduite, et lesquels collets (8), lors du serrage de l'élément de serrage (5), pénètrent dans la surface (7) du tuyau (2).

3. Dispositif de raccordement de tuyau (1) selon la revendication 1 ou 2, **caractérisé en ce que** le joint d'étanchéité (6) dispose d'au moins deux portions d'étanchéité (10, 11), la première portion d'étanchéité (10), vue par rapport à l'axe longitudinal (L), étant située avant le côté frontal (9) de la partie de manchon (3) et la deuxième portion d'étanchéité étant située du côté extérieur de la partie de manchon (3).

4. Dispositif de raccordement de tuyau selon la revendication 3, **caractérisé en ce que** la première portion d'étanchéité (10) comprend au moins une, de préférence deux, en particulier exactement deux, lignes d'étanchéité (12).

5. Dispositif de raccordement de tuyau selon l'une quelconque des revendications précédentes, **caractérisé en ce que** le joint d'étanchéité (6) s'écarte dans la direction de l'axe longitudinal (L) en partie du côté frontal (9) de l'élément de manchon (3).

6. Dispositif de raccordement de tuyau selon l'une quelconque des revendications précédentes, **caractérisé en ce que** l'élément de serrage (5) dispose d'une fente (19) s'étendant à travers l'élément de serrage (5) dans la direction de l'axe longitudinal (L), une patte de serrage respective (20) s'étendant de chaque côté de la fente à l'écart de l'élément de serrage (5), vu radialement par rapport à l'axe longitudinal (L), les pattes de serrage (20) étant en liaison l'une avec l'autre par le biais d'un élément d'actionnement (21) et étant déplacées l'une vers l'autre lors de l'opération de serrage.

7. Dispositif de raccordement de tuyau selon la revendication 6, **caractérisé en ce que** les pattes de serrage (20), dans la position de serrage, sont en contact l'une avec l'autre.

8. Dispositif de raccordement de tuyau selon la revendication 6 ou 7, **caractérisé en ce qu'**entre l'élément de serrage (5) et le joint d'étanchéité (6), dans la région de la fente (19), est prévue une partie de pont (22) surmontant la fente (19), la partie de pont (22) s'étendant en segment autour de l'axe longitudinal (L) ou la partie de pont (22) étant réalisée sous forme de bague fendue qui est introduite dans l'élément de serrage (5).

9. Dispositif de raccordement de tuyau selon l'une quelconque des revendications précédentes, **caractérisé en ce que** l'élément de serrage (5) peut être déplacé par rapport à l'élément de manchon (3), en particulier est réalisé de manière à pouvoir pivoter autour de l'axe longitudinal (L), et/ou **en ce que** le joint d'étanchéité (6) et l'élément de serrage (5) sont fixés vis-à-vis d'un déplacement dans la direction longitudinale vers l'élément de manchon (3).

10. Dispositif de raccordement de tuyau selon l'une quelconque des revendications précédentes, **caractérisé en ce que** l'élément de serrage (5) est supporté sur le côté extérieur (16) de la partie de manchon et, vu par rapport à l'axe longitudinal (L), fait saillie en partie au-delà du côté frontal (9) de l'élément de manchon (3).

11. Dispositif de raccordement de tuyau selon l'une quelconque des revendications précédentes, **caractérisé en ce que** l'élément de manchon (3) comprend deux régions d'extrémité, un élément de serrage (5) et un joint d'étanchéité respectifs (6) étant prévus dans chaque région d'extrémité, un premier tuyau pouvant être connecté à l'élément de manchon (3) avec l'élément de serrage (5) et le joint d'étanchéité (6) disposés dans la première région d'extrémité et un deuxième tuyau pouvant être connecté à l'élément de manchon avec l'élément de serrage (5) et le joint d'étanchéité (6) disposés dans la deuxième région d'extrémité.

12. Dispositif de raccordement de tuyau selon l'une quelconque des revendications précédentes, **caractérisé en ce qu'**un élément de butée (26) pour le tuyau (2) est prévu dans l'ouverture de réception (4), le tuyau (2) pouvant être enfoncé jusqu'à cet élément de butée dans l'élément de manchon (3).

13. Agencement de raccordement de tuyau comprenant un tuyau (2) s'étendant le long d'un axe médian avec une paroi latérale (29) s'étendant circonférentiellement autour de l'axe médian (L) et un espace intérieur de tuyau (30) qui est limité par la paroi latérale (29), la paroi latérale (29) comprenant un côté intérieur (31) orienté vers l'espace intérieur de tuyau (30) et un côté extérieur (7), **caractérisé en ce que** le tuyau (2) est en liaison avec un dispositif de raccordement de tuyau (1) selon l'une quelconque des revendications précédentes, le tuyau (2) pénétrant dans le dispositif de raccordement de tuyau (1) et le joint d'étanchéité (6) ainsi que l'élément de serrage (5) agissant sur le côté extérieur (7) du tuyau (2).

14. Agencement de raccordement de tuyau selon la revendication 13, **caractérisé en ce que** l'agencement comprend deux tuyaux (2) s'étendant de manière colinéaire l'un par rapport à l'autre, lesquels peuvent être connectés au dispositif de raccordement de tuyau (1).
